(19) Europäisches Patentamt
European Patent Office
Office européen des brevets

(11) **EP 2 071 305 A2**

(12) **EUROPÄISCHE PATENTANMELDUNG**

(43) Veröffentlichungstag:
**17.06.2009 Patentblatt 2009/25**

(51) Int Cl.:
***G01H 3/12*** *(2006.01)*

(21) Anmeldenummer: 08170080.9

(22) Anmeldetag: **27.11.2008**

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(30) Priorität: **06.12.2007 AT 7332007 U**

(71) Anmelder: **Kalivoda, Manfred T.**
**2344 Maria Enzersdorf (AT)**

(72) Erfinder: **Kalivoda, Manfred T.**
**2344 Maria Enzersdorf (AT)**

(74) Vertreter: **KLIMENT & HENHAPEL**
**Patentanwälte OG**
**Singerstrasse 8**
**1010 Wien (AT)**

(54) **Verfahren zur Bestimmung von Schallemissionspegeln**

(57) Verfahren zur Bestimmung von tatsächlichen, zeitunabhängigen Schallemissionspegeln ($L_k$) von Radachsen ($R_k$) eines an einer stationär angeordneten Messeinrichtung (6) vorbeifahrenden Schienenfahrzeugs mit folgenden Verfahrensschritten:
- messtechnische Ermittlung des zeitlichen Verlaufs eines Schallemissionspegels $L_m(t)$ des an der Messeinrichtung (6) vorbeifahrenden Schienenfahrzeugs,
- Bereitstellung eines Faktors $a_k(t)$, wobei der Faktor $a_k(t)$ für jede Radachse ($R_k$) die akustische Abnahme des tatsächlichen Schallemissionspegels ($L_k$) in Relation zu einem Messpunkt beschreibt
- rechnerische Ermittlung eines theoretischen Schallemissionspegels $L_r(t)$ durch Verknüpfen der tatsächlichen

Schallemissionspegel ($L_k$) mit dem Faktor $a_k(t)$
- Schätzen und Variieren der tatsächlichen Schallemissionspegel ($L_k$) der einzelnen Radachsen ($R_k$) und anschließendes Neuberechnen des theoretischen Schallemissionspegels $L_r(t)$, bis der theoretische Schallemissionspegel $L_r(t)$ im wesentlichen dem gemessenen Schallemissionspegel $L_m(t)$ entspricht.

Mittels des erfindungsgemäßen Verfahrens ist es möglich, die gegenseitige akustische Beeinflussung benachbarter Schienenfahrzeuge bzw. deren Radachsen/Radanordnungen zu eliminieren und eine realitätsgetreue Bestimmung der tatsächlichen Schallemissionspegel ($L_k$) der einzelnen Schienenfahrzeuge bzw. der jeweiligen Radachsen/Radanordnungen vorzunehmen.

Fig. 1

EP 2 071 305 A2

**Beschreibung**

Die Erfindung bezieht sich auf ein Verfahren zur Bestimmung von tatsächlichen, zeitunabhängigen Schallemissionspegeln von Radachsen eines auf einem Gleiskörper im Betrieb befindlichen und an einer stationär angeordneten Messeinrichtung vorbeifahrenden Schienenfahrzeugs bzw. eines Verbunds von Schienenfahrzeugen mit N Radachsen, gemäß Anspruch 1.

Die Überwachung von Schallemissionen von Schienenfahrzeugen, welche eine Bahninfrastruktur bzw. Gleiskörper der Bahninfrastruktur benutzen, gewinnt zunehmend an Bedeutung, um Aussagen über die Umweltverträglichkeit jeweiliger Schienenfahrzeuge treffen zu können. Sowohl bei Zulassungsmessungen als auch bei Monitoring-Messungen, also bei der Überwachung der Schallemissionen von Schienenfahrzeugen während des täglichen Betriebs ist es daher gemäß dem Stand der Technik üblich, eine akustische Messeinrichtung unter Einhaltung eines Normabstandes neben dem Gleiskörper zu installieren und damit den von einem Schienenfahrzeug bzw. von einem Verbund von Schienenfahrzeugen verursachten Schalldruckpegel, im Folgenden als Schallemissionspegel bezeichnet, zu ermitteln und entlang einer Zeitachse aufzuzeichnen. Derartige akustische Messeinrichtungen sind zumeist mit einer Datenverarbeitungsanlage samt allfälliger Speichereinheiten assoziiert, um eine statistische Auswertung der ermittelten Schallemissionspegel vorzunehmen.

Stand der Technik ist es bereits, während der Schallemissionspegel-Messungen erhaltene akustische Messergebnisse mit aktuellen Positionsdaten des jeweils überwachten Schienenfahrzeugs bzw. dessen Radachsen zu verknüpfen, z.B. um Aussagen über das Vorliegen eines Defekts einzelner Schienenfahrzeuge oder Radachsen treffen zu können.

Zur Ermittlung der aktuellen Positionsdaten des Schienenfahrzeugs werden hierbei üblicherweise optoelektronische oder induktive Achszählvorrichtungen eingesetzt.

Bei den beschriebenen Schallemissionspegel-Messungen ergibt sich jedoch die Problemstellung, dass keine genaue Aussage über den tatsächlichen Schallemissionspegel einzelner Radachsen eines Schienenfahrzeugs getroffen werden kann, da die verhältnismäßig lauteren Radachsen die dazu benachbarten, verhältnismäßig leiseren Radachsen mit ihren Schallemissionen überlagern und dadurch das Messergebnis einer auf die verhältnismäßig leisere Radachse gerichteten Schallemissions-Messung verfälschen.

Mit anderen Worten ausgedrückt, entspricht ein mittels der Messeinrichtung gemessener Schallemissionspegel einer jeweiligen Radachse in der Praxis nicht dem tatsächlichen Schallemissionspegel dieser Radachse.

Während man bei Zulassungsmessungen noch die Möglichkeit besitzt, die einzelnen Schienenfahrzeuge eines Schienenfahrzeug-Verbunds willkürlich zu reihen und dadurch die beschriebene Problematik einer Überlagerung der Schallemissionspegel zu beherrschen, so fällt diese Möglichkeit bei Monitoring-Messungen weg, da diesfalls kein Einfluss mehr auf die Reihung von lauten und leisen Schienenfahrzeugen am Gleiskörper gegeben ist.

Gemäß dem Stand der Technik (Kalivoda M.T.: Modell zur Berechnung der Schalimmission von Straßenbahnen, Dissertation an der Fakultät für Bauingenieurwesen der Techn. Univ. Graz, Graz 1987) ist es bekannt, einen charakteristischen Pegelwert für einen an einer Messeinrichtung vorbeifahrenden Schienenfahrzeug-Verbund aus dem zeitlichen Verlauf des Schallemissionspegels zu ermitteln. Grundlage für das an zitierter Stelle beschriebene Verfahren sind jedoch die idealisierten Annahmen, dass

- die Schallemissionen sämtlicher Radachsen des Schienenfahrzeug-Verbunds jeweils gleich groß sind,
- bei der Schallausbreitung nur die Richtcharakteristik der Schallemissionsquellen (Schienenfahrzeugräder) berücksichtigt wird,
- als Ergebnis der Berechnung für den jeweiligen Schienenfahrzeug-Verbund der maximale Schallemissionspegel geliefert wird.

Eine realitätsgetreue Rekonstruktion des tatsächlichen Schallemissionspegels einzelner Radachsen/Radanordnungen oder Schienenfahrzeugen bzw. eines Schienenfahrzeug-Verbundes ist unter diesen Prämissen jedoch noch nicht möglich, da

- die Grundannahme, dass jede Radachse dieselbe Schalleistung emittiere bzw. denselben Schallemissionspegel aufweise, in der Praxis nicht zutrifft,

- allgemeine Schallausbreitungsbedingungen zwischen der Radanordnung und der dazu beabstandeten Messeinrichtung nicht berücksichtigt sind.

Es ist daher die Aufgabe der vorliegenden Erfindung, ein Messverfahren der eingangs erwähnten Art bereitzustellen, das die gegenseitige akustische Beeinflussung benachbarter Radachsen/Radanordnungen eliminiert und eine möglichst genaue Rekonstruktion des tatsächlichen, zeitunabhängigen Schallemissionspegels der einzelnen Radachsen ermöglicht. Auch bei einer Vielzahl an hintereinander gereihten, unterschiedlich lauten Radachsen bzw. Schienenfahrzeugen soll aus dem zeitlichen Verlauf des Schallemissionspegels die tatsächliche Schallemission bzw. der tatsächliche Schallemissionspegel einer einzelnen Radachse bzw. eines einzelnen Schienenfahrzeugs realitätsgetreu bestimmt werden.

Erfindungsgemäß wird dies durch die kennzeichnenden Merkmale des Anspruchs 1 erreicht.

Ein Verfahren zur Bestimmung von tatsächlichen, zeitunabhängigen Schallemissionspegeln $L_k$ von Radachsen eines auf einem Gleiskörper im Betrieb befindlichen und an einer stationär angeordneten Messeinrichtung vorbeifahrenden Schienenfahrzeugs bzw. eines Verbunds von Schienenfahrzeugen mit N Radachsen, umfasst erfindungsgemäß folgende Verfahrensschritte:

- messtechnische Ermittlung des zeitlichen Verlaufs eines Schallemissionspegels $L_m(t)$ des an der Messeinrichtung vorbeifahrenden Schienenfahrzeugs bzw. des Verbunds von Schienenfahrzeugen, wobei der Schallemissionspegel $L_m(t)$ zumindest zu einer Anzahl an Messzeitpunkten $t_m$ gemessen wird, welche der Anzahl N der Radachsen entspricht

- Ermittlung von Positionsdaten der Radachsen auf dem Gleiskörper zumindest zu den Messzeitpunkten des Schallemissionspegels $L_m(t)$

- Bereitstellung eines Faktors $a_k(t)$ zumindest für jeden Messzeitpunkt $t_m$, wobei der Faktor $a_k(t)$ aufgrund der ermittelten Positionsdaten der Radachsen für jede Radachse die akustische Abnahme des tatsächlichen Schallemissionspegels $L_k$ der Radachse in Relation zu jenem Messpunkt beschreibt, an welchem sich die den Schallemissionspegel $L_m(t)$ messende Messeinrichtung befindet

- rechnerische Ermittlung eines von den tatsächlichen, zeitunabhängigen Schallemissionspegeln $(L_k)$ der einzelnen Radachsen des Schienenfahrzeugs bzw. des Verbunds von Schienenfahrzeugen abhängenden theoretischen Schallemissionspegels $L_r(t)$ für ausgewählte Messzeitpunkte durch Verknüpfen der tatsächlichen, zeitunabhängigen Schallemissionspegel $L_k$ mit dem Faktor $a_k(t)$, wobei die tatsächlichen, zeitunabhängigen Schallemissionspegel $L_k$ vorerst geschätzt werden

- Variieren der tatsächlichen, zeitunabhängigen Schallemissionspegel $L_k$ der einzelnen Radachsen des Schienenfahrzeugs bzw. des Verbunds von Schienenfahrzeugen und anschließendes Neuberechnen des theoretischen Schallemissionspegels $L_r(t)$, bis der theoretische Schallemissionspegel $L_r(t)$ für alle oder für eine gewünschte Anzahl der ausgewählten Messzeitpunkte im wesentlichen den gemessenen Schallemissionspegeln $L_m(t)$ zu diesen Messzeitpunkten entspricht.

Um den tatsächlichen (von der Zeit unabhängigen) Schallemissionspegel $L_k$ einer Radachse bzw. Radanordnung eines Schienenfahrzeugs mit dem laufenden Index k während der Vorbeifahrt an der Messeinrichtung zu bestimmen, wird also ein iteratives Rechenverfahren angewendet. Eine für den (von sämtlichen Radachsen am Messpunkt erzeugen) theoretischen Schallemissionspegel $L_r(t)$ zu einem ausgewählten Messzeitpunkt errechnete Iterationsfolge konvergiert im Zuge des erfindungsgemäßen Verfahrens zu einem bestimmten Wert, welcher schließlich mit dem zum selben Messzeitpunkt gemessenen Schallemissionspegel $L_m(t)$ übereinstimmt bzw. diesem annähernd gleichkommt.

Der solcherart ermittelte tatsächliche Schallemissionspegel $L_k$ einer jeweiligen (k-ten) Radachse kann in der Folge explizit ausgegeben bzw. abgespeichert werden.

Auf diese Weise ist es möglich, die gegenseitige akustische Beeinflussung benachbarter Radachsen von Schienenfahrzeugen zu eliminieren und eine sehr genaue Rekonstruktion des tatsächlichen, zeitunabhängigen Schallemissionspegels der einzelnen Radachsen der Schienenfahrzeuge zu ermöglichen. Das gegenseitige Übertönen einzelner verschieden lauter Radachsen bzw. Schienenfahrzeuge verzerrt somit nicht mehr die Ergebnisse bei standardmäßig durchgeführten Schallemissionsmessungen bei Schienenfahrzeugen. Insbesondere bei Monitoring-Messungen zur Überwachung des Schienenfahrzeug-Verkehrs ist es somit fortan möglich, den tatsächlichen Schallemissionspegel einer jeweils interessierenden Radachse bzw. eines einzelnen Schienenfahrzeugs realitätsgetreu zu bestimmen.

Es sei angemerkt, dass, wenn von Schallemissionspegeln der Radachsen die Rede ist, selbstverständlich die Schallemissionen sämtlicher diesen Radachsen zugeordneter Bauteile, z.B. von Rädern, Radlagern etc. einbezogen sind, insofern auch von Schallemissionspegeln jeweiliger Radanordnungen die Rede sein könnte.

Es sei des weiteren angemerkt, dass sich die "Zeitunabhängigkeit" des tatsächlichen Schallemissionspegels $L_k$ einer Radachse auf jeweils eine Vorbeifahrt des Schienenfahrzeugs bzw. der Radachse an der Messeinrichtung bezieht. Selbstverständlich ist es möglich, dass bei einer erneuten Schienenfahrzeugsvorbeifahrt an der Messeinrichtung, z.B. einen Tag nach der beschriebenen Ermittlung des tatsächlichen Schallemissionspegels $L_k$ einer beobachteten Radachse bereits ein geänderter tatsächlicher Schallemissionspegel $L_k$ dieser Radachse vorliegt. Z.B. könnte sich der tatsächliche Schallemissionspegel $L_k$ dieser Radachse zufolge eines technischen Defekts der Radachse im Vergleich zur letzten Schienenfahrzeugsvorbeifahrt erhöht haben.

Indem bei der erfindungsgemäßen Ermittlung des theoretischen Schallemissionspegels $L_r(t)$ bzw. in weiterer Folge bei der Ermittlung des tatsächlichen Schallemissionspegels $L_k$ ein Faktor $a_k(t)$ miteinbezogen wird, welcher die akustische Abnahme des Schallemissionspegels $L_m(t)$ in Relation zu jenem Messpunkt beschreibt, an welchem sich die den Schallemissionspegel $L_m(t)$ messende Messeinrichtung befindet, können mittels des erfindungsgemäßen Verfahrens weitgehend realitätsgetreue Ergebnisse erzielt werden, welche allgemeine Schallausbreitungsbedingungen im Umkreis einer jeweils installierten Messeinrichtung berücksichtigen.

Das Verknüpfen der zunächst geschätzten, tatsächlichen Schallemissionspegel $L_k$ mit dem Faktor $a_k(t)$ zur Berechnung des theoretischen Schallemissionspegels $L_r(t)$ kann in einer bevorzugten Ausführungsvariante des erfindungsgemäßen Verfahrens erfolgen, indem der tatsächliche Schallemissionspegel $L_k$ einer Radachse mit dem Faktor $a_k(t)$ als Summand beaufschlagt wird, was eine schnell arbeitende Rechenschleife ermöglicht. Ebenso kann es sich beim Faktor $a_k(t)$ jedoch auch um einen (Multiplikations-)Faktor im mathematischen Sinne handeln.

Es kann eine umso größere Genauigkeit des Rechenergebnisses erzielt werden, je mehr akustische Effekte in den Faktor $a_k(t)$ Einfluss finden bzw. eine Berücksichtigung erhalten. Daher ist es in bevorzugten Ausführungsvarianten des erfindungsgemäßen Verfahrens vorgesehen, dass mittels des Faktors $a_k(t)$ die Vorbeifahrtgeschwindigkeit des Schienenfahrzeugs bzw. des Verbunds von Schienenfahrzeugen und/oder die Geometrie des Schienenfahrzeugs bzw. des Verbunds von Schienenfahrzeugen und/oder eine zum Gleiskörper bzw. zur Messeinrichtung benachbarte Geländeform und/oder eine zwischen Gleiskörper und der Messeinrichtung vorhandene Bodenabsorption und/oder akustische Festlegungen wie insbesondere eine Zeit- und Frequenzbewertung einzelner Messpegel des Schallemissionspegels $L_m(t)$ sowie allfällige weitere relevante Bedingungen berücksichtigt werden.

Eine effiziente Möglichkeit zur Ermittlung des theoretischen Schallemissionspegels $L_r(t)$ wird ermöglicht, indem dieser sich nach folgender Formel bestimmt:

$$L_r(t) = 10\, lg\, (_k\Sigma\, \{10^{\,(L_k\, +\, a_k(t))/10}\,\}\,) \quad \texttt{mit} \qquad L_k(t) = L_k + a_k(t) \quad \texttt{und} \quad \texttt{k=1 bis N}$$

Bedingt durch allfällige Messfehler wird es im Allgemeinen nicht möglich sein, eine Lösung zu finden, bei welcher der gemessene Schallemissionspegel $L_m(t)$ zu allen Messzeitpunkten dem theoretischen Schallemissionspegel $L_r(t)$ entspricht. Dies wäre nur dann der Fall, wenn man die Anzahl der für die Ermittlung des tatsächlichen Schallemissionspegels $L_k$ betrachteten Messzeitpunkte so wählt, dass sie genau der Anzahl der Radachsen des jeweils observierten Schienenfahrzeugs bzw. Schienenfahrzeug-Verbundes entsprechen.

Ein statistisch besser abgesichertes Ergebnis erhält man jedoch dann, wenn die Anzahl der für die Ermittlung des tatsächlichen Schallemissionspegels $L_k(t)$ betrachteten Zeitpunkte wesentlich größer ist als die Anzahl der Radachsen eines jeweiligen Schienenfahrzeugs bzw. Schienenfahrzeug-Verbundes.

In diesem Fall werden die gesuchten tatsächlichen Schallemissionspegel $L_k$ vorzugsweise mittels der Methode der minimalen Abweichungsquadrate (Gauß-Markow-Modell) ermittelt:

$$_t\Sigma\ e_t^{\,2}\ =\ {}_t\Sigma\ (L_m(t) - L_r(t))^{\,2} \quad \texttt{min}$$

oder

$$_t\Sigma\ e_t^{\,2}\ =\ {}_t\Sigma\ \{(L_m(t) - 10\ lg\ (_k\Sigma\ (10^{\,(L_k + a_k(t))/10})))\}^{\,2} \qquad \texttt{min}$$

Die Erfindung wird nun anhand eines Ausführungsbeispiels näher erläutert. Dabei zeigt:

Fig.1    einen beispielhaften, schematisch dargestellten Aufbau eines Messsystems zur Durchführung eines erfindungsgemäßen Verfahrens

Fig.2    eine Tabellenmatrix mit spezifische Schallausbreitungsbedingungen beschreibenden Faktoren $a_k(t)$

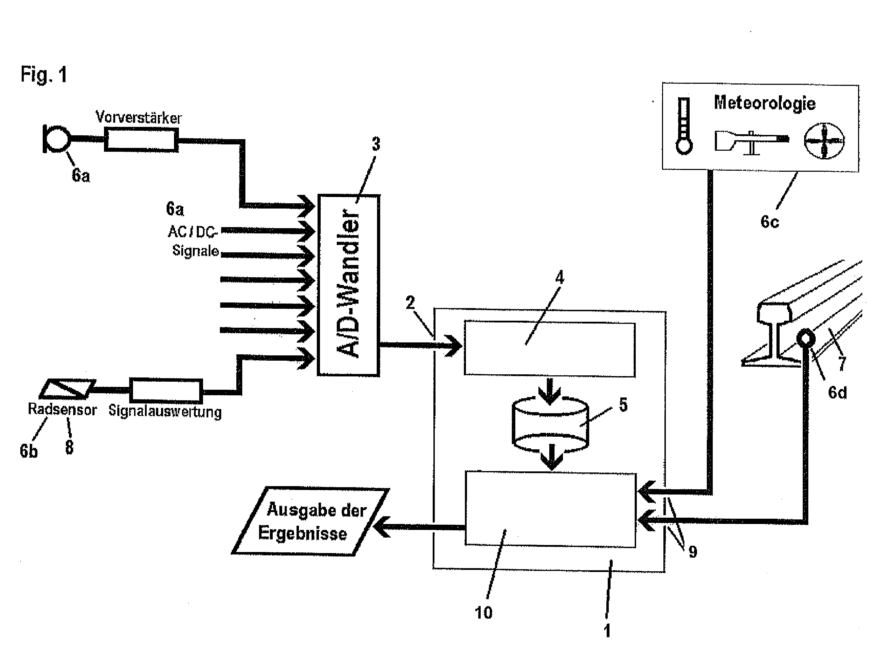

Fig.1 zeigt eine Datenverarbeitungsanlage 1, vorzugsweise einen PC, mit einer Dateneingangsschnittstelle 2, über welche zuvor mittels eines A/D Wandlers 3 digitalisierte Messdaten an die Datenverarbeitungsanlage 1 übergeben werden. Auf der Datenverarbeitungsanlage 1 läuft ein Messdatenauswerteprogramm 4, das in der Lage ist, die vom A/D Wandler 3 kommenden Messdaten entsprechend auszuwerten und die entsprechenden Messwerte wiederzugeben.

Vorzugsweise werden diese, bevor sie weiterverarbeitet werden, auf einem Speichermedium 5 der Datenverarbeitungsanlage gespeichert.

Der A/D Wandler 3 ist eingangsseitig mit einer Messeinrichtung 6 verbunden, Die Messeinrichtung 6 umfasst eine Reihe von Messsensoren, wobei unter anderem Messsensoren 6a zur Messung von Schallemissionspegeln $L_m(t)$ vorgesehen sind, die von einem auf einem Gleiskörper im Betrieb befindlichen Schienenfahrzeug bzw. einem Verbund von Schienenfahrzeugen emittiert werden, wie beispielsweise Mikrofone oder Beschleunigungsaufnehmer. Des weiteren sind Messsensoren 6b vorgesehen, die zur Detektion der Position des jeweils observierten Schienenfahrzeugs bzw. des Verbundes von Schienenfahrzeugen am Gleiskörper dienen. Die Messsensoren 6a, 6b sind dabei stationär an einem bzw. im Bereich eines Gleiskörpers angeordnet, wobei für jedes passierende Schienfahrzeug mehrere aufeinanderfolgende Messungen durchgeführt werden und dabei die Schallemissionspegel $L_m(t)$, welche durch die passierenden Schienfahrzeuge verursacht werden, über die Zeit messtechnisch erfasst werden und gleichzeitig auch die Position des Schienfahrzeugs über die Zeit messtechnisch erfasst wird, wie im Folgenden noch näher beschrieben.

Das Messdatenauswerteprogramm 4 wertet die von den Messsensoren 6 an den A/D Wandler 3 und in weiterer Folge an die Datenverarbeitungsanlage 1 übergebenen Daten so aus, dass einerseits Positionsdaten (=Daten, aus welchen die Position des Schienenfahrzeuges ermittelt werden können) des Schienenfahrzeuges bzw. des Verbundes von Schienenfahrzeugen bzw. deren Radachsen $R_k$ über der Zeit zur Verfügung stehen und andererseits Messdaten, welche dem zeitlichen Verlauf des Schallemissionspegeln $L_m(t)$ sowie allfälligen physikalischen bzw. atmosphärischen Parameterwerten über der Zeit entsprechen.

Als Messsensoren können dabei prinzipiell aus dem Stand der Technik bekannte Messsensoren eingesetzt werden, die in der Lage sind, die interessierenden Messdaten zu messen.

Zur Bestimmung der Position des N Radachsen $R_k$ aufweisenden Schienenfahrzeuges bzw. des Verbundes von Schienenfahrzeugen auf dem Gleiskörper können beispielsweise induktive Radsensoren 8 zum Einsatz kommen. Es ist dabei ausreichend, diese entlang einer einzelnen Schiene 7 des Gleiskörpers zu positionieren. Die Detektion der Position des Schienenfahrzeuges erfolgt aufgrund des zeitlichen Abstandes, mit welchem die Radachsen $R_k$ der Schienenfahrzeuge einen definierten Messquerschnitt durchfahren, wobei unter Messquerschnitt jene Ebene normal auf die Gleisachse verstanden wird, in der sich die Messsensoren befinden. Sobald das Passieren eines Rades detektiert wird, ist damit die genaue Position einer Radachse $R_k$ des Schienenfahrzeugs bekannt.

Es können aber auch alternative Möglichkeiten der Positionsbestimmung zum Einsatz kommen, wie beispielsweise Lichtschranken andere optische Sensoren oder Beschleunigungsaufnehmer, welche anhand der Gleiskörperbelastung das Passieren eines Schienenfahrzeugs detektieren.

Gleichzeitig mit der Ermittlung von Positionsdaten des Schienenfahrzeugs bzw. der Radachsen $R_k$ des Schienenfahrzeugs und der Ermittlung der einzelnen Messpegel des Schallemissionspegels $L_m(t)$ wird des weiteren die aktuelle Geschwindigkeit des passierenden Schienenfahrzeugs bzw. Schienfahrzeugsverbundes ermittelt. Die SchienenfahrzeugsGeschwindigkeit kann hierbei anhand der von den Messsensoren 6b erhaltenen Positionsdaten oder mittels eines anderen Geschwindigkeits-Messsystems vorgenommen werden.

Optional werden mittels weiterer Messsensoren 6c und 6d auch meteorologische Messdaten, wie beispielsweise Lufttemperatur, Luftfeuchtigkeit, Windgeschwindigkeit und Windrichtung aufgezeichnet, sowie Zusatzdaten, welche nicht in unmittelbarem Zusammenhang mit einer Schienenfahrzeugsvorbeifahrt stehen. Ebenso kann es von Interesse sein, die Schienentemperatur und die durch das Schienenfahrzeug verursachte Gewichtsbelastung des Gleiskörpers messtechnisch zu erheben. Diese Daten werden ebenfalls über eine Dateneingangsschnittstelle 9 an die Datenverarbeitungsanlage 1 übergeben.

Der gleichzeitigen Ermittlung einzelner Messpegel des Schallemissionspegels $L_m(t)$ je Schienenfahrzeugsvorbeifahrt und der Position des Schienenfahrzeuges bzw. des Schienenfahrzeugverbundes auf dem Gleiskörper folgt eine gemäß dem Stand der Technik an sich bekannte zeitliche Zuordnung der ermittelten Positionsdaten der Radachsen $R_k$ des Schienenfahrzeuges bzw. des Schienenfahrzeugverbundes zum gemessenen Schallemissionspegel $L_m(t)$, genauer gesagt zu den einzelnen an Messzeitpunkten $t_m$ ermittelten Messpegeln des Schallemissionspegels $L_m(t)$.

Diese Zuordnung erfolgt bevorzugterweise automatisch. Im vorliegenden Ausführungsbeispiel übernimmt ein auf der Datenverarbeitungsanlage 1 laufendes Zuordnungsprogramm 10 die automatisierte Zuordnung der ermittelten Messpegel zu den Positionsdaten.

Die Anzahl der für die Ermittlung des tatsächlichen Schallemissionspegels $L_k$ einer Radachse $R_k$ betrachteten Messzeitpunkte $t_m$, also die Anzahl der mittels der Messeinrichtung 6 durchgeführten Messungen der Messpegel des Schallemissionspegels $L_m(t)$ und der Schienenfahrzeugs-Positionsdaten entspricht mindestens der Anzahl N der Radachsen $R_k$ eines jeweils beobachteten Schienenfahrzeugs bzw. Schienenfahrzeug-Verbunds.

Wie bereits einleitend erwähnt, repräsentieren die zu den Messzeitpunkten $t_m$ durchgeführten Messungen des Schallemissionspegels $L_m(t)$ nicht die tatsächlichen Schallemissionspegel $L_k$ einzelner Radachsen $R_k$ des Schienenfahrzeugs bzw. Schienenfahrzeug-Verbunds, da sich die Schallemissionspegel $L_k$ benachbarter Radachsen $R_k$ stets überlagern bzw. addieren.

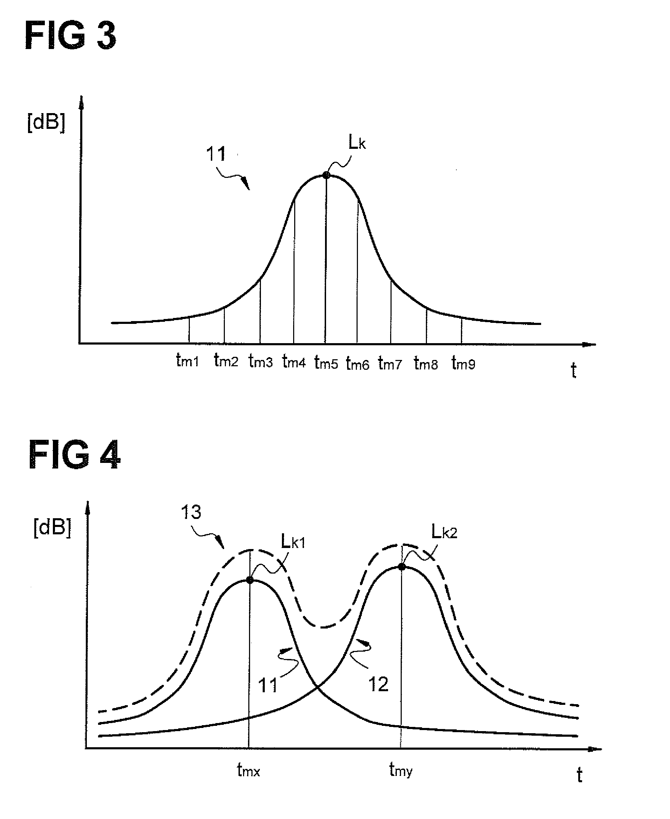

Um dies zu verdeutlichen, ist in Fig.3 in rein beispielhafter Weise ein mit Bezugsziffer 11 versehener Verlauf eines gemessenen Schallemissionspegels $L_m(t)$ einer einzelnen Radachse $R_1$ eines Schienenfahrzeugs dargestellt.

Hierbei wurde zu den Messzeitpunkten $t_{m1}$ - $t_{m9}$ jeweils ein in der Einheit [dB] angegebener Messpegel ermittelt, wobei eine Zusammenschau bzw. Verknüpfung sämtlicher Messpegel den zeitlich verlaufenden und mittels der Kurve 11 dargestellten Schallemissionspegel $L_m(t)$ ergibt. Im vorliegenden Beispiel entspricht das zum Messzeitpunkt $t_{m5}$ gemessene Maximum des Schallemissionspegels $L_m(t)$ jenem Messpegel, welcher exakt zum Zeitpunkt des Passierens der Radachse $R_1$ an der Messeinrichtung 6 ermittelt wurde.

Es sei angemerkt, dass die Darstellung gemäß Fig.3 stark vereinfacht ist und in der Praxis selbstverständlich eine weit höhere Messfrequenz bzw. eine größere Anzahl an Messzeitpunkten $t_m$ vorgesehen sein kann, um eine exaktere statistische Auswertung zu gewährleisten.

Unter der Voraussetzung der gemäß Fig.3 idealisierten Annahme, dass zur Radachse $R_1$ keine weiteren Radachsen $R_k$ benachbart sind, entspräche die im wesentlichen glockenförmige Kurve 11 auch gleichzeitig dem zeitlichen Verlauf des tatsächlichen Schallemissionspegels $L_{k1}$ der Schienenfahrzeug-Radachse $R_1$.

In der Praxis ergibt sich jedoch eine Überlagerung der tatsächlichen Schallemissionspegel $L_k$ benachbarter Radachsen $R_k$. So ist etwa in Fig.4 in schematischer Weise eine Überlagerung des Schallemissionspegels $L_{k1}$ der ersten Radachse $R_1$ (siehe Kurve 11) mit einem Schallemissionspegel $L_{k2}$ einer zweiten Radachse $R_2$ (siehe Kurve 12) dargestellt. Hierbei ist ersichtlich, wie sich die Schallemissionspegel $L_{k1}$, $L_{k2}$ der beiden Radachsen $R_1$, $R_2$ bzw. die Kurven 11 und 12 in Richtung der Ordinate zu einer Kurve 13 addieren. Diese Kurve 13 entspricht dem während der Schienenfahrzeugsvorbeifahrt an der Messeinrichtung 6 messtechnisch ermittelten Schallemissionspegel $L_m(t)$ (nicht berücksichtigt sind in diesem Zusammenhang allfällige Störeinflüsse bzw. weitere Geräuschquellen). Wie in Fig.4 erkennbar, weisen also zu Messzeitpunkten $t_{mx}$, $t_{my}$ gemessene Messpegel des Schallemissionspegels $L_m(t)$ jeweils eine akustische Komponente beider Radachsen $R_1$, $R_2$ auf, ohne dass zunächst die tatsächlichen Schallemissionspegeln $L_{k1}$, $L_{k2}$ der Radachsen $R_1$, $R_2$ identifiziert werden könnten.

Zusätzlich zur bisher beschriebenen Ermittlung realer Messdaten, insbesondere des zeitlichen Verlaufs des Schallemissionspegels $L_m(t)$, erfolgt erfindungsgemäß eine theoretische Berechnung eines von den tatsächlichen Schallemissionspegeln $L_k$ der einzelnen Radachsen $R_k$ des Schienenfahrzeugs bzw. des Verbunds von Schienenfahrzeugen abhängenden theoretischen Schallemissionspegels $L_r(t)$. Hierbei wird zunächst eine Schätzung der tatsächlichen, zeitunabhängigen Schallemissionspegel $L_k$ der einzelnen Radachsen des Schienenfahrzeugs bzw. des Schienenfahrzeugs/ des Verbunds von Schienenfahrzeugen durchgeführt. Eine solche Schätzung der tatsächlichen, zeitunabhängigen Schallemissionspegel $L_k$ kann sich anhand von - z.B. in einer Datenbank bereitgehaltenen - Erfahrungswerten und/oder anhand einer Auswertung aktuell erhobener Messdaten orientieren und wird automatisiert durchgeführt.

Gemäß einer bevorzugten Ermittlungsweise bestimmt sich ein für einen jeweiligen Messzeitpunkt $t_m$ bestimmter, theoretischer Schallemissionspegel $L_r(t)$ wie folgt:

$$L_r(t) = 10 \; lg \left( {}_k\Sigma \left\{ 10^{(L_k(t))/10} \right\} \right)$$

Um die akustische Abnahme des tatsächlichen Schallemissionspegels $L_k$ in Relation zu jenem Messpunkt zu beschreiben, an welchem sich die den Schallemissionspegel $L_m(t)$ messende Messeinrichtung 6 bzw. der Messsensor 6a befindet, bedarf es der Einbeziehung eines Faktors $a_k(t)$ gemäß $L_k(t)=L_k+a_k(t)$.

Ein Faktor $a_k(t)$ muss zumindest für jeden Messzeitpunkt $t_m$ bereitgestellt werden, wobei für jeden Messzeitpunkt $t_m$ die exakten Positionsdaten der Radachsen $R_k$ auf dem Gleiskörper und somit in Relation zum Messsensor 6a bzw. zum Messmikrofon bekannt sein müssen, sodass den Positionsdaten der Radachsen $R_k$ entsprechende Faktoren $a_k(t)$ ausgewählt werden können.

Hierbei muss auch die Position der Messeinrichtung 6 bzw. des Messsensors 6a in Relation zum Gleiskörper genau bekannt sein. Der Messsensor 6a kann etwa in einem Normabstand gemäß EN ISO 3095 angeordnet sein. Gemäß dieser Norm ist eine Entfernung des Messsensors 6a zur Gleisachse von 7,5 m sowie eine Anordnung des Messsensors 6a auf einer Höhe von 1,2 über einer Schienenoberkante des Gleiskörpers vorgesehen.

Um Faktoren $a_k(t)$ generieren zu können, muss also zumindest jener Messpunkt klar definiert sein, an welchem sich die den Schallemissionspegel $L_m(t)$ messende Messeinrichtung 6 bzw. der Messsensors 6a befindet.

Bezogen auf die Darstellung gemäß Fig.3 würde etwa der Faktor $a_k(t)$ zum Messzeitpunkt $t_{m5}$, an welchem die Radachse $R_1$ die Messeinrichtung 6 passiert, Null sein, weil $L_k(t_{m5})=L_k$ ist.

Der zur Errechnung des theoretischen Schallemissionspegels $L_r(t)$ miteinbezogene Faktor $a_k(t)$ nimmt des weiteren Rücksicht auf die Vorbeifahrtgeschwindigkeit des Schienenfahrzeugs bzw. des Verbunds von Schienenfahrzeugen und/oder die Geometrie des Schienenfahrzeugs bzw. des Verbunds von Schienenfahrzeugen und/oder eine zum Gleiskörper bzw. zur Messeinrichtung benachbarte Geländeform und/oder eine zwischen Gleiskörper und der Messeinrichtung vorhandene Bodenabsorption und/oder akustische Festlegungen wie insbesondere eine Zeit- und Frequenzbewertung einzelner Messpegel des Schallemissionspegels $L_m(t)$ sowie allfällige weitere, z.B. mittels der Messsensoren 6c und 6d ermittelte relevante Bedingungen. Unter der interessierenden Geometrie des Schienenfahrzeugs werden insbesondere die Achsabstände jeweiliger Schienfahrzeug-Typen bzw. Schienfahrzeug-Verbunde verstanden.

Mit anderen Worten werden mittels des Faktors $a_k(t)$ nicht nur die Entfernung der einzelnen Radachsen von der Messeinrichtung 6, sondern auch spezifische Schallausbreitungsbedingungen bzw. akustische Effekte berücksichtigt, welche bei der Ermittlung des theoretischen Schallemissionspegels $L_r(t)$ zu einer größeren Rechengenauigkeit verhelfen.

Hierbei versteht es sich, dass eine umso größere Genauigkeit des Rechenergebnisses erzielt werden kann, je mehr akustische Effekte bzw. Schallausbreitungsbedingungen - auch in der vorliegenden Beschreibung nicht genannte - in den Faktor $a_k(t)$ miteinbezogen werden.

Der in den Figuren 3 bzw. 4 dargestellte glockenförmige Verlauf der Schallemissionspegel-Kurven 11, 12 der Radachsen $R_k$ ist über die Faktoren $a_k(t)$ bestimmt. Je nach Festlegung der Faktoren $a_k(t)$ für einzelne Radachsen $R_k$ bzw. Schienefahrzeuge kann der im Diagramm dargestellte glockenförmige Verlauf der Kurven 11, 12 breiter oder schmäler sein bzw. eine stärkere oder geringere Steigung aufweisen.

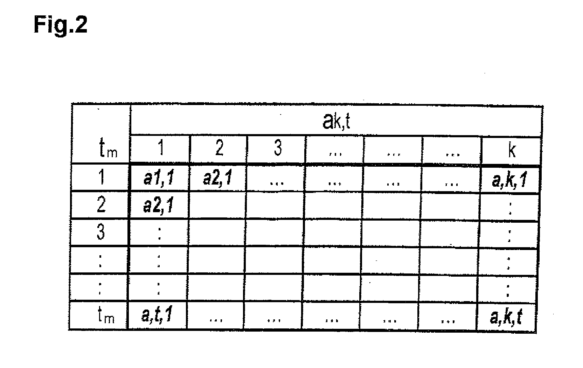

Die für sämtliche Messzeitpunkte $t_m$ herangezogenen Faktoren $a_k(t)$ können, so wie in Fig.2 ersichtlich, in einer Tabellenmatrix bereitgehalten werden bzw. je nach aktuell ermittelter Schienefahrzeugsgeschwindigkeit oder entsprechend anderer Parameter aktualisiert werden. Hierbei kann eine derartige Tabelle mit Faktoren $a_k(t)$ für jeden für die messtechnische Erfassung relevanten Schienenfahrzeugtyp auf einem Speichermedium bereitgehalten werden.

Es sei angemerkt, dass der als Faktor bezeichnete Wert $a_k(t)$ kein Faktor im mathematischen Sinne sein muss, sondern ebenso- so im vorliegenden Ausführungsbeispiel der Fall - ein Summand (mit positivem oder negativem Vorzeichen) sein kann.

Zumindest für jeden Messzeitpunkt $t_m$ wird also ein Faktor $a_k(t)$ bereitgestellt und bei der Ermittlung des theoretischen Schallemissionspegels $L_r(t)$ miteinbezogen, indem der Faktor $a_k(t)$ jeweils mit den tatsächlichen Schallemissionspegeln $L_k$ der Radachsen $R_k$ verknüpft wird.

Da der tatsächliche Schallemissionspegel $L_k$ einer Radachse $R_k$ des Schienenfahrzeugs bzw. des Verbunds von Schienenfahrzeugen im vorliegenden Ausführungsbeispiel mit dem Faktor $a_k(t)$ als Summand beaufschlagt wird, erweitert sich die zuvor angeführte Formel zur Berechnung des theoretischen Schallemissionspegels $L_r(t)$, den alle N Radachsen $R_k$ zum Zeitpunkt $t_m$ am Messpunkt erzeugen, wie folgt:

$$L_r(t) = 10 \ lg \ (_k\Sigma \ \{10^{\ (Lk \ + \ ak(t))/10} \ \} \ )$$

Erfindungsgemäß wird nun die für den tatsächlichen Schallemissionspegel $L_k$ eingesetzte (noch unbekannte) Variable $L_k$ zunächst geschätzt und so lange variiert, bis der nach jeder durchgeführten Variation der Schallemissionspegel $L_k$ neu berechnete theoretische Schallemissionspegel $L_r(t)$ für alle oder für eine gewünschte Anzahl an ausgewählten Messzeitpunkten $t_m$ im wesentlichen dem gemessenen Schallemissionspegel $L_m(t)$ zu diesen Messzeitpunkten $t_m$ entspricht, genauer gesagt, den ermittelten Messpegeln des Schallemissionspegels $L_m(t)$ zu diesen Messzeitpunkten $t_m$ entspricht. In der Folge wird der für den tatsächlichen Schallemissionspegel $L_k$ erhaltene Wert in expliziter Form von der Datenverarbeitungsanlage 1 ausgegeben bzw. abgespeichert.

Um den tatsächlichen (von der Zeit unabhängigen) Schallemissionspegel $L_k$ eines Schienenfahrzeugs oder einer Radachse $R_k$ bzw. Radanordnung eines Schienenfahrzeugs während der Vorbeifahrt an der Messeinrichtung 6 zu bestimmen, wird also ein iteratives Rechenverfahren angewendet.

Die für den theoretischen Schallemissionspegel $L_r(t)$ errechnete Iterationsfolge konvergiert in Zuge des erfindungsgemäßen Verfahrens zu einem bestimmten, z.B. in der Einheit Dezibel [dB] ausgegebenen Wert, welcher schließlich mit dem gemessenen Schallemissionspegel $L_m(t)$ übereinstimmt oder diesem zumindest annähernd gleichkommt.

Umgelegt auf die schematische Darstellung gemäß Fig.4 werden erfindungsgemäß die jeweiligen (zunächst hypothetisch angenommenen) Pegelwerte der Schallemissionspegel $L_{k1}$ und $L_{k2}$ der beiden Radachsen $R_{k1}$ und $R_{k2}$ so lange variiert, bis sich eine durch obige Formel erhaltene (dem theoretischen Schallemissionspegel $L_r(t)$ entsprechende) Schallemissionspegel-Kurve mit der dem gemessenen Schallemissionspegel $L_m(t)$ entsprechenden Kurve 13 deckt bzw. annähernd deckt. Hat man den theoretischen Schallemissionspegel $L_r(t)$ in zufrieden stellender Annäherung an den gemessenen Schallemissionspegel $L_m(t)$ errechnet, steht einer expliziten Ausgabe der tatsächlichen Schallemissionspegel $L_{k1}$ und $L_{k2}$ der Radachsen $R_{k1}$ und $R_{k2}$ aus obiger Formel nichts mehr im Wege.

Wegen unvermeidlicher Messfehler mittels der Messeinrichtung 6 wird es im Allgemeinen nicht möglich sein, eine Lösung zu finden, bei der zu allen Messzeitpunkten $t_m$

$$L_m(t) = L_r(t)$$

ist. Dies wäre nur dann der Fall, wenn man die Anzahl der Messzeitpunkte $t_m$, die man betrachtet, so wählt, dass sie genau der Anzahl N der Radachsen $R_k$ des jeweils observierten Schienenfahrzeugs bzw. Schienenfahrzeug-Verbundes entspricht.

Ein statistisch besser abgesichertes Ergebnis erhält man jedoch dann, wenn die Anzahl der für die Ermittlung des tatsächlichen Schallemissionspegels $L_k$ betrachteten Messzeitpunkte $t_m$ größer ist als die Anzahl N der Radachsen $R_k$ eines jeweiligen Schienenfahrzeugs bzw. Schienenfahrzeug-Verbundes, insbesondere, wenn die Zeitpunkte $t_m \gg N$ gewählt werden.

Die gesuchten tatsächlichen Schallemissionspegel $L_k$ können in solchem Fall beispielsweise mit der Methode der minimalen Abweichungsquadrate ermittelt werden:

$$_t\Sigma\ e_t{}^2\ \ =\ _t\Sigma\ (L_m(t) - L_r(t))^2\ \ \ \ \ min$$

oder

$$_t\Sigma\ e_t{}^2\ \ =\ _t\Sigma\ \{(L_m(t) - 10\ lg\ (_k\Sigma\ (10^{(L_k + a_k(t))/10})))\}^2\ \ \ \ \ min$$

Mit anderen Worten gesprochen, wird ein von der Datenverarbeitungsanlage 1 errechneter Schallemissionspegel $L_r(t)$ bzw. ein in der Folge ermittelter tatsächlicher Schallemissionspegel $L_k$ dann als hinreichend genau angesehen, wenn die Quadratsumme der Messabweichungen aller beobachteten Schallemissionspegel minimal wird.

Alternativ dazu können auch andere Fehlerbewertungsfunktionen bzw. Ausgleichrechnungen Einsatz finden.

Es sei ferner angemerkt, dass es sich bei den für die Ermittlung des tatsächlichen Schallemissionspegels $L_k$ betrachteten Messzeitpunkten $t_m$ nicht unbedingt um jene Zeitpunkte handeln muss, an welchen die Messeinrichtung 6 eine tatsächlich eine Erhebung eines Messpegels des Schallemissionspegels $L_m(t)$ durchgeführt hat, sondern selbstverständlich auch zwischen diesen (tatsächlichen) Messzeitpunkten $t_m$ interpolierte Zeitpunkte bzw. Messpegel für das erfindungsgemäße Verfahren herangezogen werden können.

**Patentansprüche**

1. Verfahren zur Bestimmung von tatsächlichen, zeitunabhängigen Schallemissionspegeln ($L_k$) von Radachsen ($R_k$) eines auf einem Gleiskörper im Betrieb befindlichen und an einer stationär angeordneten Messeinrichtung (6) vorbeifahrenden Schienenfahrzeugs bzw. eines Verbunds von Schienenfahrzeugen mit N Radachsen, wobei folgende Verfahrensschritte durchgeführt werden:

   - messtechnische Ermittlung des zeitlichen Verlaufs eines Schallemissionspegels $L_m(t)$ des an der Messeinrichtung (6) vorbeifahrenden Schienenfahrzeugs bzw. des Verbunds von Schienenfahrzeugen, wobei der Schallemissionspegel $L_m(t)$ zumindest zu einer Anzahl an Messzeitpunkten $t_m$ gemessen wird, welche der Anzahl N der Radachsen entspricht
   - Ermittlung von Positionsdaten der Radachsen ($R_k$) auf dem Gleiskörper zumindest zu den Messzeitpunkten des Schallemissionspegels $L_m(t)$
   - Bereitstellung eines Faktors $a_k(t)$ zumindest für jeden Messzeitpunkt $t_m$, wobei der Faktor $a_k(t)$ aufgrund der ermittelten Positionsdaten der Radachsen ($R_k$) für jede Radachse ($R_k$) die akustische Abnahme des tatsächlichen Schallemissionspegels ($L_k$) der Radachse ($R_k$) in Relation zu jenem Messpunkt beschreibt, an welchem sich die den Schallemissionspegel $L_m(t)$ messende Messeinrichtung (6) befindet
   - rechnerische Ermittlung eines von den tatsächlichen, zeitunabhängigen Schallemissionspegeln ($L_k$) der einzelnen Radachsen ($R_k$) des Schienenfahrzeugs bzw. des Verbunds von Schienenfahrzeugen abhängenden theoretischen Schallemissionspegels $L_r(t)$ für ausgewählte Messzeitpunkte $t_m$ durch Verknüpfen der tatsächlichen, zeitunabhängigen Schallemissionspegel ($L_k$) mit dem Faktor $a_k(t)$, wobei die tatsächlichen, zeitunabhängigen Schallemissionspegel ($L_k$) vorerst geschätzt werden
   - Variieren der tatsächlichen, zeitunabhängigen Schallemissionspegel ($L_k$) der einzelnen Radachsen ($R_k$) des Schienenfahrzeugs bzw. des Verbunds von Schienenfahrzeugen und anschließendes Neuberechnen des theoretischen Schallemissionspegels $L_r(t)$, bis der theoretische Schallemissionspegel $L_r(t)$ für alle oder für eine gewünschte Anzahl der ausgewählten Messzeitpunkte $t_m$ im wesentlichen den gemessenen Schallemissionspegeln $L_m(t)$ zu diesen Messzeitpunkten $t_m$ entspricht.

**2.** Verfahren nach Anspruch 1, **dadurch gekennzeichnet, dass** sich der theoretische Schallemissionspegel $L_r(t)$ wie folgt bestimmt:

$$L_r(t) = 10 \, lg \left( {}_k\Sigma \left\{ 10^{(L_k + a_k(t))/10} \right\} \right)$$

**3.** Verfahren nach Anspruch 1 oder 2, **dadurch gekennzeichnet, dass** der Faktor $a_k(t)$ die Vorbeifahrtgeschwindigkeit des Schienenfahrzeugs bzw. des Verbunds von Schienenfahrzeugen und/oder die Geometrie des Schienenfahrzeugs bzw. des Verbunds von Schienenfahrzeugen und/oder eine zum Gleiskörper bzw. zur Messeinrichtung benachbarte Geländeform und/oder eine zwischen Gleiskörper und der Messeinrichtung vorhandene Bodenabsorption und/oder allgemeine Schallausbreitungsbedingungen und/oder akustische Festlegungen wie insbesondere eine Zeit- und Frequenzbewertung einzelner Messpegel des Schallemissionspegels $L_m(t)$ berücksichtigt.

**4.** Verfahren nach einem der Ansprüche 1 bis 3, **dadurch gekennzeichnet, dass** die Anzahl der für die Ermittlung des tatsächlichen Schallemissionspegels ($L_k$) betrachteten Messzeitpunkte (t) mindestens der Anzahl N der Radachsen ($R_k$) eines jeweiligen Schienenfahrzeugs bzw. Schienenfahrzeug-Verbundes entspricht.

**5.** Verfahren nach Anspruch 4, **dadurch gekennzeichnet, dass** der tatsächliche Schallemissionspegel ($L_k$) mit der Methode der minimalen Abweichungsquadrate ermittelt wird:

$$_t\Sigma \; e_t^2 \; = \; {}_t\Sigma \; (L_m(t) - L_r(t))^2 \quad min$$

oder

$$_t\Sigma \; e_t^2 \; = \; {}_t\Sigma \; \left\{ (L_m(t) - 10 \; lg \; ({}_k\Sigma \; (10^{(L_k + a_k(t))/10})) ) \right\}^2 \quad min$$

Fig. 1

Vorverstärker

6a

6a
AC / DC
Signale

Radsensor
8
Signalauswertung
6b

A/D-Wandler

3

Ausgabe der
Ergebnisse

2

10

4

5

1

9

Meteorologie

6c

6d

**Fig.2**

| $t_m$ | $a_{k,t}$ | | | | | | |
|---|---|---|---|---|---|---|---|
| | 1 | 2 | 3 | ... | ... | ... | k |
| 1 | a1,1 | a2,1 | ... | ... | ... | ... | a,k,1 |
| 2 | a2,1 | | | | | | : |
| 3 | : | | | | | | : |
| : | : | | | | | | : |
| : | : | | | | | | : |
| $t_m$ | a,t,1 | ... | ... | ... | ... | ... | a,k,t |

## FIG 3

## FIG 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **KALIVODA M.T.** Modell zur Berechnung der Schalimmission von Straßenbahnen. *Dissertation an der Fakultät für Bauingenieurwesen der Techn. Univ. Graz,* 1987